# EUROPEAN PATENT SPECIFICATION

(11) **EP 1 863 665 B1**
(45) Date of publication and mention of the grant of the patent: **09.09.2009**
(21) Application number: 06727364.9
(22) Date of filing: 28.03.2006
(51) Int. Cl.: B60J 5/04

(54) **VEHICLE DOOR STRUCTURE**
FAHRZEUGTÜRSTRUKTUR
STRUCTURE DE PORTIERE DE VEHICULE

(30) Priority: 01.04.2005 JP 2005106555
(43) Date of publication of application: 12.12.2007
(73) Proprietor: TOYOTA JIDOSHA KABUSHIKI KAISHA, Toyota-shi, Aichi-ken, 471-8571 (JP)
(72) Inventor: SHIBASAKI, Shinichi c/o TOYOTA JIDOSHA KABUSHIKI KAISHA, Aichi-ken, 471-8571 (JP)
(74) Representative: Winter, Brandl, Fürniss, Hübner Röss, Kaiser, Polte Partnerschaft Patent- und Rechtsanwaltskanzlei
(86) International application number: PCT/IB2006/000693
(87) International publication number: WO 2006/103519

(56) References cited:
- EP-A1- 0 989 007
- WO-A-03/059670
- GB-A- 1 116 359
- GB-A- 2 152 883
- US-A1- 2005 046 227
- US-B1- 6 196 619

## Description

### BACKGROUND OF THE INVENTION

### 1. Field of the Invention

The invention relates to a vehicle door structure.

### 2. Description of Related Art

As a door structure provided for a vehicle, there exists a structure in which a reinforcement beam extending from an upper hinge of a side door or from a location adjacent thereto toward a vicinity of the door striker is attached to an inner panel by spot welding (e.g., Japanese Translation of PCT International Application No. 2004-520224).

The foregoing door structure is designed so that at the time of a side crash of the vehicle, the reinforcement beam bears crash load input to the door, and transfers it to a vehicle body pillar. However, the addition of such a reinforcement beam increases the weight of the door, and the man-hours for attachment of the reinforcement beam. Furthermore, in conjunction with securement of a space needed for installation of various devices within the door, there is fear that the addition of a reinforcement beam will involve an increase in the thickness of the door.
The preamble of claim 1 is disclosed by US 2005/046227.

### SUMMARY OF THE INVENTION

It is an object of the invention to provide a vehicle door structure capable of avoiding the weight increase, the man-hour increase, and the door thickness increase involved with the addition of another member such as a reinforcement beam or the like.

A vehicle door structure in a first aspect of the invention includes an inner panel provided with first and second coupling portions that are disposed on sides of a perimeter of a door that are different from each other so as to couple the door and a vehicle body. The inner panel has a reinforcement work portion that extends so as to substantially connect the first coupling portion and the second coupling portion.

According to this vehicle door structure, the reinforcement work portion of the inner panel extends so as to substantially connect the first coupling portion and the second coupling portion disposed on sides of the perimeter of the door that are different from each other. Therefore, in the case where another vehicle or the like crashes into the door, the input of crash load to the inner panel results in concentration of tensile stresses in the reinforcement work portion, and thus the crash load is converted into tensions that act in the reinforcement work portion, with the two coupling portions serving as supports. In this manner, the crash load is received by the inner panel. Then, the crash load received by the inner panel is dispersed from the reinforcement work portion to the first and second coupling portions, and is thus transferred to the vehicle body. Thus, it becomes possible to take crash countermeasures without attaching a separate member such as a reinforcement beam or the like. Hence, the weight increase, the attaching man-hour increase, and the door thickness increase that would be involved with the addition of a separate member can be avoided. A construction in which a separate member, such as a reinforcement beam or the like, is attached to an inner panel has no capability to receive crash load when the crash load is input to a position apart from the reinforcement beam. In contrast, in the structure of the invention, the inner panel and the reinforcement work portion are provided as an integral piece, and therefore the inner panel is able to receive crash load even when the position of input of the crash load is apart to some extent from the reinforcement work portion. Hence, compared with the construction in which a separate member, such as a reinforcement beam or the like, is attached to the inner panel, the structure of the invention is capable of enlarging the regions that are able to receive crash load. Furthermore, although in the construction in which a separate member, such as a reinforcement beam or the like, is attached to the inner panel, the capacity for crash load can be increased by improving the flexural rigidity of the reinforcement beam, the improvement of the flexural rigidity of the reinforcement beam inevitably involves an increase in the weight of the reinforcement beam. The structure of the invention can minimize such a weight increase since crash load is received in the form of tensions that act in the reinforcement work portion of the inner panel. Incidentally, in the case where the door is a side door, the reinforcement work portion is arranged in the inner panel in such a fashion that the reinforcement work portion extends in a longitudinal direction of the vehicle so as to substantially connect two coupling portions that are provided on a front end and a rear end of the side door, or a front end and a lower end thereof, or a rear end and a lower end thereof, respectively. Furthermore, in the case where the door is a back door, the reinforcement work portion is arranged in the inner panel in such a fashion that the reinforcement work portion extends in a lateral direction of the vehicle so as to substantially connect two coupling portions that are provided on a left side end and a right side end of the back door, or a left side end and a lower end thereof, or a right side end and a lower end thereof, respectively.

The reinforcement work portion in the invention is not limited at all, as long as it has been constructed by performing on the inner panel a working for enhancing the mechanical characteristics thereof such as the rigidity and the like thereof. For example, the reinforcement work portion may be constructed of a rib provided with a greater wall thickness than other portions of the inner panel, or may also be constructed of a bead protruded on the obverse side or the reverse side of the inner panel. If the reinforcement work portion is constructed of a bead, it is possible to construct the reinforcement work portion without involving any substantial weight increase. Incidentally, there is no restriction regarding the number of such beads; the number thereof may be one, or a plurality of beads may be juxtaposed widthwise to construct the reinforcement work portion.

In the vehicle door structure of the invention, one of the first and second coupling portions may be a hinge of the door, and another one of the first and second coupling portions may be a lock member of the door. In this case, crash load can be dispersed to the hinge and the lock portion that couple the door and the vehicle body.

In the vehicle door structure of the invention, the inner panel may further comprise a third coupling portion that is disposed on the perimeter of the door so as to couple the door and the vehicle body, and may further have a subsidiary reinforcement work portion that branches from the reinforcement work portion and that extends toward the third coupling portion. According to this aspect, since the subsidiary reinforcement work portion adds to the crash load transfer paths, the regions able to receive crash load can be further enlarged. Furthermore, the mechanical characteristics of the inner panel, such as the rigidity, the strength, etc., will improve. Similar to the reinforcement work portion, the subsidiary reinforcement work portion may be constructed of a rib as described above, or may also be constructed of a subsidiary bead that is protruded on the obverse side or the reverse side of the inner panel. The construction of the subsidiary reinforcement work portion may be the same as or different from that of the reinforcement work portion.

In the vehicle door structure of the invention, the inner panel may further comprise third and fourth coupling portions that are disposed on sides of the perimeter of the door that are different from each other so as to couple the door and the vehicle body, and may have another reinforcement work portion that extends so as to substantially connect the third coupling portion and the fourth coupling portion and that intersects with the aforementioned reinforcement work portion. According to this aspect, since the two intersecting reinforcement work portions add to the crash load transfer paths, the regions able to receive crash load can be further enlarged. Furthermore, the mechanical characteristics of the inner panel, such as the rigidity, the strength, etc., will improve.

As described above, according to the invention, crash load is converted into tensions that act in the reinforcement work portion, and is thus received by the inner panel. Therefore, it becomes possible to take crash countermeasures without attaching a separate member, such as a reinforcement beam or the like, to the inner panel.

### BRIEF DESCRIPTION OF THE DRAWINGS

FIG. 1 is a front view of a door in accordance with a first embodiment of the invention.

FIG. 2 is a perspective view of the door of FIG. 1.

FIG. 3 is a side view of the door of FIG 1 viewed from forward of the vehicle.

FIG. 4 is a side view of the door of FIG 1 viewed from rearward of the vehicle.

FIG. 5 is a sectional view taken on line V-V in FIG 1.

FIG. 6 is a sectional view taken on line VI-VI in FIG 1.

FIG. 7 is an explanatory drawing showing a coupling structure between a vehicle body-side hinge and an upper hinge.

FIG. 8 is a perspective view showing a detailed structure of the vehicle body-side hinge.

FIG. 9 is a drawing showing the structure of an L-shape hinge as a comparative example.

FIG 10 is a front view of a door in accordance with a second embodiment of the invention.

### DETAILED DESCRIPTION OF THE PREFERRED EMBODIMENTS

### First Embodiment

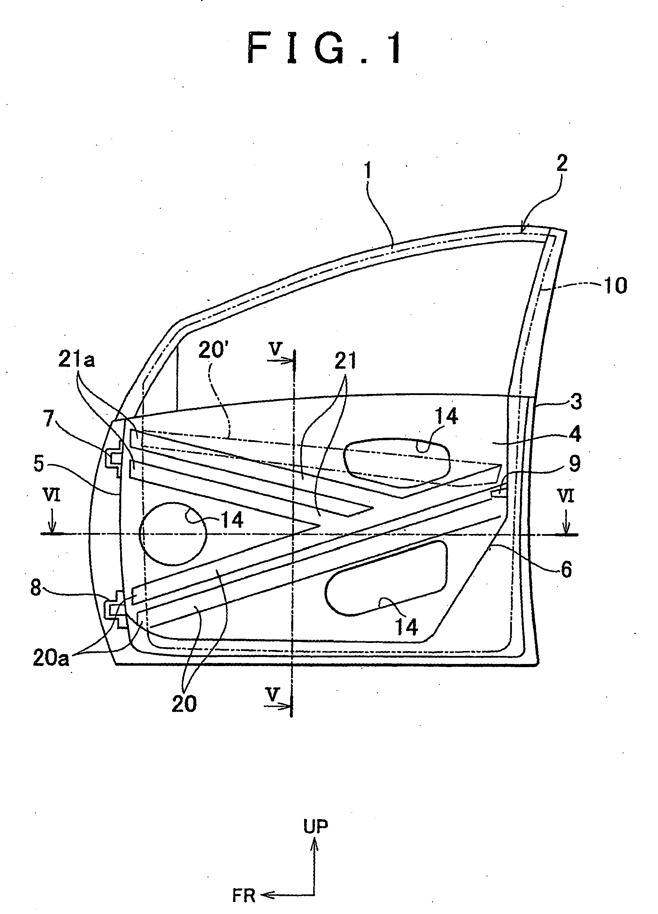

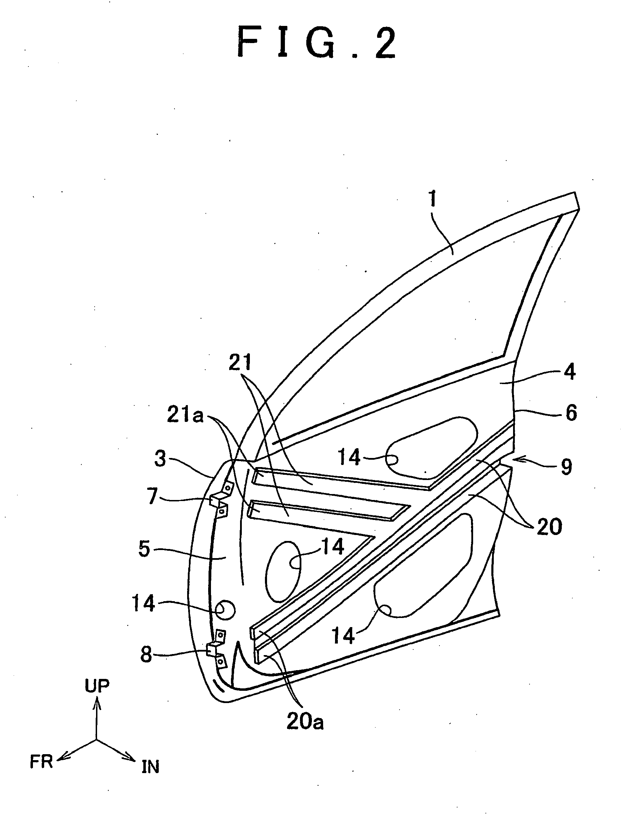

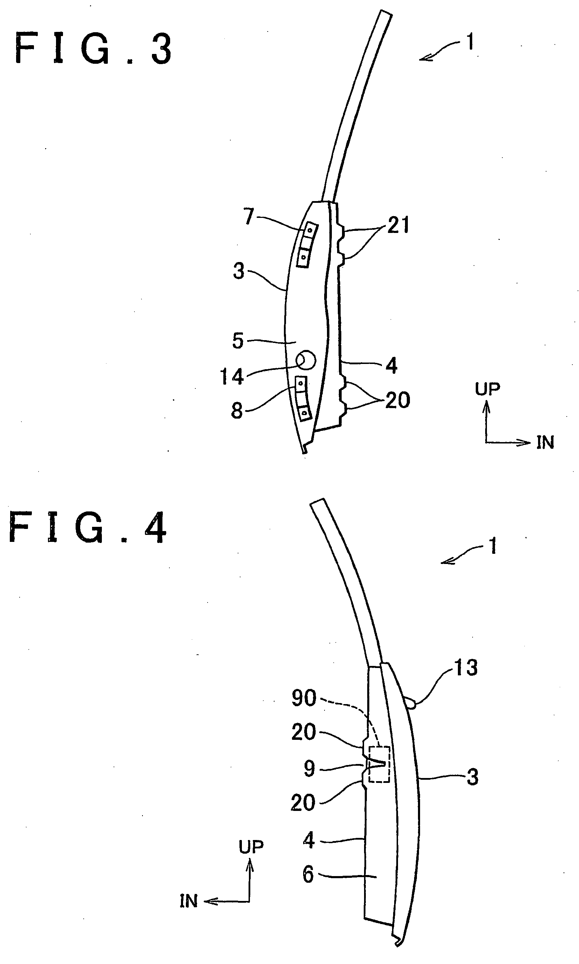

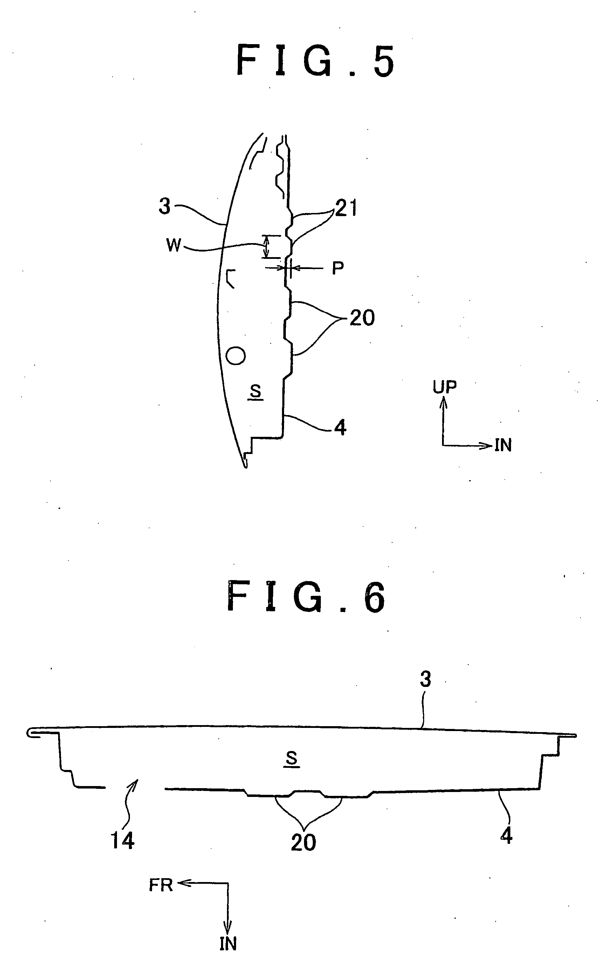

FIGS. 1 to 6 show an embodiment of a vehicle side door (hereinafter, sometimes referred to simply as "door") to which the vehicle door structure of the invention is applied. FIG. 1 is a front view of a door 1; FIG. 2 is a perspective view of the door 1; FIG 3 is a side view of the door 1 viewed from forward of the vehicle; FIG. 4 is a side view of the door 1 viewed from rearward of the vehicle; FIG 5 is a sectional view taken on line V-V in FIG. 1; and FIG. 6 is a sectional view taken on line VI-VI in FIG. 1. It is to be noted herein that in these drawings, FR, UP and IN indicate a forward direction of the vehicle, an upward direction of the vehicle, and a laterally inward direction of the vehicle, respectively (this applies to other drawings as well).

As shown in FIGS. 1 to 4, the door 1 is formed by combining an outer panel 3 disposed at an outer side of a vehicle body 2 in the lateral direction of the vehicle, and an inner panel 4 disposed at an inner side of in the lateral direction of the vehicle The outer panel 3 is provided with a door knob 13 (FIG 4). A side wall 5 of the inner panel 4 that is forward in the vehicle is provided with the upper hinge 7 and a lower hinge 8 that are juxtaposed in the up-down direction of the vehicle, and a side wall 6 of the inner panel 4 that is rearward in the vehicle is provided with a lock portion 9.

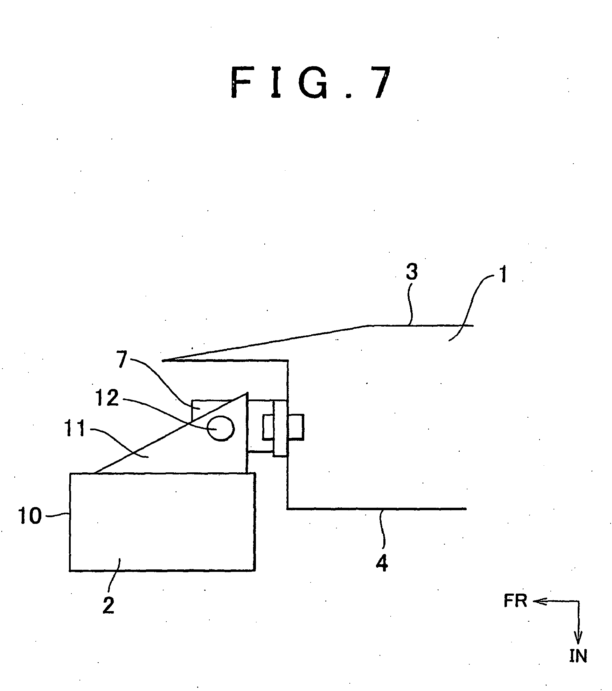

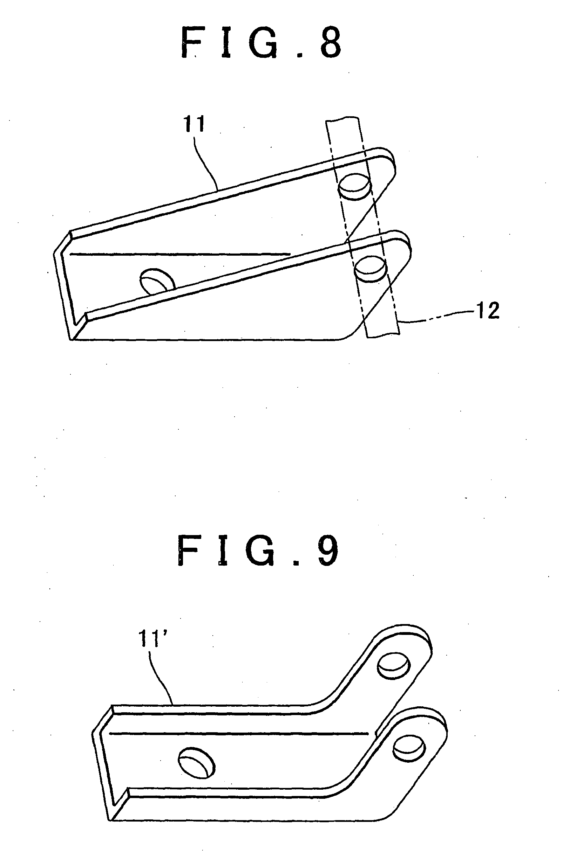

The upper hinge 7 is coupled in a hinge fashion to one of two vehicle body-side hinges 11, 11 that are provided on a side member 10 of the vehicle body 2 as indicated in FIG 7. Although FIG 7 only shows a structure for the upper hinge 7, the structure for the lower hinge 8 is substantially the same, that is, the lower hinge 8 is coupled in a hinge fashion to the other vehicle body-side hinge 11 and a pivot 12. Thus, the door 1 and the vehicle body 2 are coupled so that the door 1 can be opened and closed. Incidentally, each vehicle body-side hinge 11 has a triangular shape in a view from the direction of an axis of the pivot 12, as also shown in FIG. 8, and is attached to the side member 10 so that its hypotenuse faces outward in the lateral direction of the vehicle. Therefore, the vehicle body-side hinges 11 are better in mechanical characteristics, such as rigidity, strength, etc., and can withstand greater load than an L-shape hinge 11' as shown in FIG 9.

As shown in FIG. 4, the lock portion 9 constitutes a well-known door catch mechanism 90 that includes a hook (not shown) that operates together with the door knob 13 provided in the outer panel 3. The coupling of the door 1 to the vehicle body 2, and the release thereof are accomplished by alternating the engagement of the door catch mechanism 90 with and the release thereof from a door striker (not shown) attached to the side member 10. Incidentally, the door catch mechanism 90 and the.door striker may be replaced with each other, that is, the lock portion 9 may be formed by a door striker. Since the lower hinge 8 and the lock member 9 are disposed on sides of the perimeter of the door 1 that are different from each other so as to couple the door 1 and the vehicle body 2 in the above-described manner, the lower hinge 8 and the lock portion 9 correspond to a first coupling portion and a second coupling portion, respectively, in the invention. The upper hinge 7 corresponds to a third coupling portion in the invention.

As shown in FIGS. 1 and 2, the inner panel 4 has two beads 20, 20 that extend so as to substantially connect the lower hinge 8 and the lock portion 9, and two subsidiary beads 21, 21 that branch from a substantially central portion of a bead 20 and extend toward the upper hinge 7. The two beads 20, 20 correspond to a reinforcement work portion in the invention, and the two subsidiary beads 21, 21 correspond to a subsidiary reinforcement work portion in the invention. The beads and the subsidiary beads reinforce the inner panel 4. In the description below, the two beads 20, 20 will sometimes be referred to as "bead 20" as a representation, and the two subsidiary beads 21, 21 will sometimes be referred to as "subsidiary bead 21" as a representation. The bead pattern formed by the bead 20 and the subsidiary bead 21 is in a Y-shape. The bead 20 and the subsidiary bead 21 are protruded inward in the lateral direction of the vehicle (on the obverse surface of the inner panel 4) as shown in FIGS. 5 and 6. An end portion 20a of the bead 20 and an end portion 21a of the subsidiary bead 21 are located near the side wall 5 that is provided with the lower hinge 8 (see FIG 2). However, the bead 20 and the subsidiary bead 21 may be further extended to the side wall 5 so that the end portions thereof become even nearer to the upper hinge 7 or the lower hinge 8. The bead 20 and the subsidiary bead 21 may be formed simultaneously with the press working of the inner panel 4. The bead protrusion amount P and the bead width W as indicated in FIG 5 are suitably designed without any particular restriction. The bead protrusion amount P and the bead width W may be either different or the same between the bead 20 and the subsidiary bead 21. Furthermore, the bead protrusion amount P and the bead width W may be fixed or varied along the bead length. Incidentally, a bead 20' (indicated by a two-dot chain line in FIG 1) extending so as to substantially connect the upper hinge 7 and the lock portion 9 may be added to construct the reinforcement work portion. In this formation, the upper hinge 7 functions as a first coupling portion as well. Note that the bead 20' may be provided in place of the subsidiary bead 21. In this case, the bead pattern formed by the beads 20 and 20' has a V-shape.

Furthermore, the inner panel 4, as shown in FIGS. 1 and 2, has a plurality of openings 14, ... 14 that are formed in such a manner as to avoid the bead 20 and the subsidiary bead 21, for the attachment and maintenance of various devices (not shown), such as speakers, wind regulators, etc., that are installed in a space (see FIGS. 5 and 6) substantially defined by the outer panel 3 and the inner panel 4. There are no particular restrictions regarding the formation of the openings 14 such as the number, the shape, or the like thereof

According to the foregoing door structure, in the case where another vehicle or the like crashes into the door 1, the input of crash load to the inner panel 4, as for example, results in concentration of tensile stresses in the bead 20 and the subsidiary bead 21, and thus the crash load is converted into tensions occurring therein. In this manner, the crash load is received by the inner panel 4. Then, the crash load received by the inner panel 4 is dispersed from the bead 20 and the subsidiary bead 21 to the upper hinge 7, the lower hinge 8 and the lock portion 9, and is thus transferred to the vehicle body. Since the bead 20 and the subsidiary bead 21 are formed integrally with the inner panel 4, crash load can be received by the inner panel 4 even if the position of input of the crash load is apart to some extent from the bead 20 and the subsidiary bead 21. Thus, the regions able to receive crash load enlarge, so that it becomes easier to cope with crash load that can be input to irregular positions. Furthermore, since the provision of the bead 20 and the subsidiary bead 21 does not substantially involve any weight increase, crash countermeasures can be taken without increasing the weight of the door.

### Second Embodiment

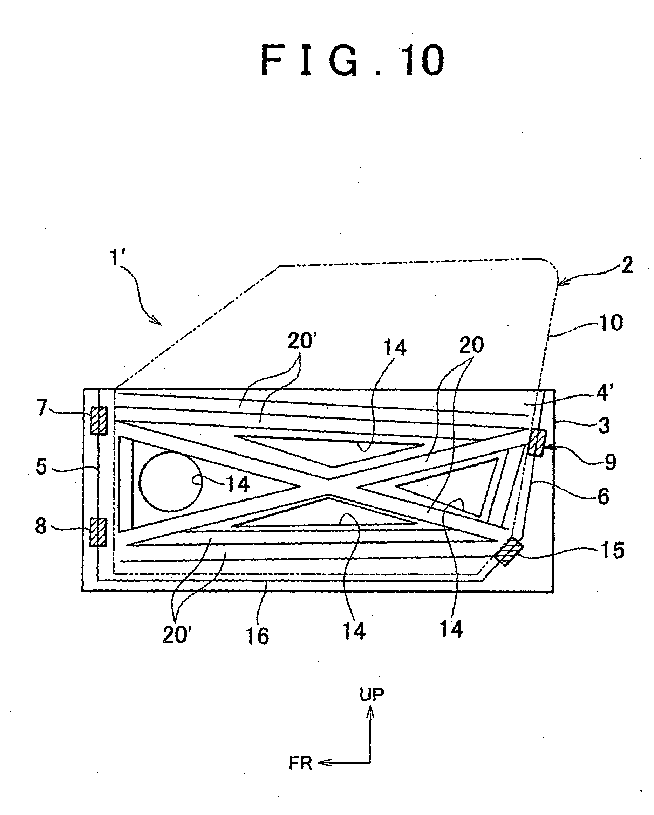

FIG 10 is a front view showing a second embodiment of the invention. Hereinafter, the same constructions as in the first embodiment are assigned with the same reference numerals in FIG. 10, and redundant descriptions will be avoided below. As shown in FIG 10, a door 1' of this embodiment has a subsidiary latch 15 that is added as a fourth coupling portion that is positioned lower, in the vehicle, than a lock portion 9. An inner panel 4' has a bead 20 that extends so as to substantially connect an upper hinge 7 and the subsidiary latch 15, and another bead 20 that extends so as to substantially connect a lower hinge 8 and the lock portion 9. These beads intersect with each other in a substantially central portion of the inner panel 4' so as to form an X-shape bead pattern. The subsidiary latch 15 is added in order to enhance the coupling between the door 1 and the vehicle body 2, and is a well-known mechanism capable of coupling the door 1 and the vehicle body and discontinuing the coupling. Furthermore, the door 1' has a bead 20' that extends so as to substantially connect the upper hinge 7 and the lock portion 9, and another bead 20' that extends so as to substantially connect the lower hinge 8 and the subsidiary latch 15.

According to this door structure, since the transfer paths of crash load input to the door 1' increase in number, the regions able to receive crash load become even larger than in the first embodiment. Furthermore, since the mechanical characteristics of the inner panel 4', such as the rigidity, the strength, etc., improve, it becomes possible to receive increased crash load and transfer it to the vehicle body 2. Although in this embodiment, the subsidiary latch 15 is provided on the side wall 6 of the inner panel 4', at a position that is lower, in the vehicle, than the lock portion 9, the position of the subsidiary latch 15 may be changed to a wall 16 of the inner panel 4' that is located relatively low in the vehicle, and a bead 20 may be provided which extends so as to substantially connect the subsidiary latch 15 and at least one of the upper hinge 7, the lower hinge 8 and the lock portion 9.

The invention is not limited to the foregoing embodiments, but may be embodied in various forms within the scope of the invention. For example, the vehicle door structure of the invention may be applied to a rear side door of a four-door type vehicle. Furthermore, it may also be applied to a back door of a wagon type vehicle. Still further, as long as the inner panel has a plurality of coupling portions, the invention is applicable not only to a door that is hinge-coupled at an end thereof to the vehicle body for opening and closing movements, but also to a so-called slide type door.

The reinforcement work portion or the subsidiary reinforcement work portion may also be realized by a rib that is formed by a locally increased wall thickness of the inner panel. The number of the foregoing beads 20 or subsidiary beads 21 is not restricted, that is, may be one or more than one. Furthermore, in the case where such beads or subsidiary beads are juxtaposed in the width direction, their pitch in the width direction (see FIG 1) may be appropriately set.

## Claims

1. A vehicle door structure comprising an inner panel (4, 4') provided with first and second coupling portions (8, 9) that are disposed on sides of a perimeter of a door (1,1') that are different from each other so as to couple the door (1,1') and a vehicle body (2),
**characterized in that**
the inner panel (4,4') has a reinforcement work portion (20, 20') that is integrally formed with the inner panel (4,4') and that extends so as to substantially connect the first coupling portion (8) and the second coupling portion (9).

2. The door structure according to claim 1, wherein the reinforcement work portion is constructed of a bead (20, 20') that is protruded on an obverse side or a reverse side of the inner panel (4, 4').

3. The door structure according to claim 1 or 2, wherein one of the first and second coupling portions is a hinge (8) of the door, and another one of the first and second coupling portions is a lock member (9) of the door.

4. The door structure according to any one of claims 1 to 3, wherein the inner panel (4) further comprises a third coupling portion (7) that is disposed on the perimeter of the door (1, 1') so as to couple the door (1, 1') and the vehicle body (2), and further has a subsidiary reinforcement work portion (21) that branches from the reinforcement work portion (20, 20') and that extends toward the third coupling portion (7).

5. The door structure according to claim 4, wherein the subsidiary reinforcement work portion is constructed of a subsidiary bead (21) that is protruded on the obverse side or the reverse side of the inner panel (4, 4').

6. The door structure according to claim 1 or 2, wherein the inner panel (4') further comprises third and fourth coupling portions (7,15) that are disposed on sides of the perimeter of the door (1') that are different from each other so as to couple the door (1') and the vehicle body (2), and has another reinforcement work portion (20) that extends so as to substantially connect the third coupling portion (7) and the fourth coupling portion (15) and that intersects with said reinforcement work portion (20).

7. The door structure according to any one of claims 1 to 4, wherein a pattern formed by the reinforcement work portion (20) and the subsidiary reinforcement work portion (21) is in a Y-shape.

8. The door structure according to any one of claims 1 to 4, wherein a pattern formed by the reinforcement work portions (20, 20') is in a V-shape.

9. The door structure according to claim 6, wherein a pattern formed by the reinforcement work portions (20) is in an X-shape.

10. The door structure according to claim 6, wherein:
the first coupling portion is a lower hinge (8) of the door;
the second coupling portion is a lock member (9) of the door;
the third coupling portion is an upper hinge (7) of the door; and
the fourth coupling portion is a subsidiary latch (15) of the door.

11. The door structure according to any one of claims 1 to 10, wherein the reinforcement work portion (20, 20') is a rib that is formed by a locally increased wall thickness of the inner panel.

12. The door structure according to any one of claims 1 to 11, wherein the subsidiary reinforcement work portion (21) is a rib that is formed by a locally increased wall thickness of the inner panel.

## Patentansprüche

1. Fahrzeugtürstruktur, welche ein inneres Paneel (4, 4') aufweist, das mit einem ersten und einem zweiten Kopplungsabschnitt (8, 9) versehen ist, welche an unterschiedlichen Seiten eines Umfangs einer Tür (1, 1') angeordnet sind, um die Tür (1, 1') und eine Fahrzeugkarosserie (2) zu koppeln, **dadurch gekennzeichnet, dass**
das innere Paneel (4, 4') einen Verstärkungsabschnitt (20, 20') hat, welcher integriert mit dem inneren Paneel (4, 4') ausgebildet ist und welcher sich so erstreckt, dass er im Wesentlichen den ersten Kopplungsabschnitt (8) und den zweiten Kopplungsabschnitt (9) verbindet.

2. Türstruktur gemäß Anspruch 1, wobei der Verstärkungsabschnitt als eine Wulst (20, 20') ausgebildet ist, welche an einer Vorder- oder Rückseite des inneren Paneels (4, 4') vorspringt.

3. Türstruktur gemäß Anspruch 1 oder 2, wobei einer von dem ersten und dem zweiten Kopplungsabschnitt ein Gelenkteil (8) der Tür ist und der andere von dem ersten und dem zweiten Kopplungsabschnitt ein Verriegelungsteil (9) der Tür ist.

4. Türstruktur gemäß einem der Ansprüche 1 bis 3, wobei das innere Paneel (4) ferner einen dritten Kopplungsabschnitt (7) aufweist, welcher am Umfang der Tür (1, 1') ausgebildet ist, um die Tür (1, 1') und die Fahrzeugkarosserie (2) zu koppeln, und ferner einen Verstärkungshilfsabschnitt (21) hat, welcher von dem Verstärkungsabschnitt (20, 20') abzweigt und sich in Richtung des dritten Kopplungsabschnitts (7) erstreckt.

5. Türstruktur gemäß Anspruch 4, wobei der Verstärkungshilfsabschnitt als eine Nebenwulst (21) ausgebildet ist, welche an der Vorder- oder Rückseite des inneren Paneels (4, 4') vorspringt.

6. Türstruktur gemäß Anspruch 1 oder 2, wobei das innere Paneel (4') ferner einen dritten und einen vierten Kopplungsabschnitt (7, 15) aufweist, welche an unterschiedlichen Seiten des Umfangs der Tür (1') angeordnet sind, um die Tür (1') und die Fahrzeugkarosserie (2) zu koppeln, und einen weiteren Verstärkungsabschnitt (20) hat, welcher sich so erstreckt, dass er im Wesentlichen den dritten Kopplungsabschnitt (7) und den vierten Kopplungsabschnitt (15) verbindet und den Verstärkungsabschnitt (20) schneidet.

7. Türstruktur gemäß einem der Ansprüche 1 bis 4, wobei eine durch den Verstärkungsabschnitt (20) und den Verstärkungshilfsabschnitt (21) gebildete Struktur Y-förmig ist.

8. Türstruktur gemäß einem der Ansprüche 1 bis 4, wobei eine durch die Verstärkungsabschnitte (20, 20') gebildete Struktur V-förmig ist.

9. Türstruktur gemäß Anspruch 6, wobei eine durch die Verstärkungsabschnitte (20) gebildete Struktur X-förmig ist.

10. Türstruktur gemäß Anspruch 6, wobei:
der erste Kopplungsabschnitt ein unteres Gelenkteil (8) der Tür ist;
der zweite Kopplungsabschnitt ein Verriegelungsteil (9) der Tür ist;
der dritte Kopplungsabschnitt ein oberes Gelenkteil (7) der Tür ist; und
der vierte Kopplungsabschnitt ein Hilfsverschluss (15) der Tür ist.

11. Türstruktur gemäß einem der Ansprüche 1 bis 10, wobei der Verstärkungsabschnitt (20, 20') eine Rippe ist, welche durch eine stellenweise erhöhte Wandstärke des inneren Paneels gebildet wird.

12. Türstruktur gemäß einem der Ansprüche 1 bis 11, wobei der Verstärkungshilfsabschnitt (21) eine Rippe ist, welche durch eine stellenweise erhöhte Wandstärke des inneren Paneels gebildet wird.

## Revendications

1. Structure de portière d'un véhicule comprenant un panneau intérieur (4, 4') doté d'une première et d'une seconde parties d'accouplement (8, 9) qui sont disposées sur des côtés d'un périmètre d'une portière (1, 1') qui sont distinctes entre elles de manière à raccorder la portière (1, 1') et une carrosserie (2) du véhicule, **caractérisée en ce que**
le panneau intérieur (4, 4') possède une partie (20, 20') opérationnelle de renforcement qui est formée venue de matière avec le panneau intérieur (4, 4') et qui s'étend de manière à essentiellement raccorder la première partie d'accouplement (8) et la seconde partie d'accouplement (9).

2. Structure de portière selon la revendication 1, dans laquelle la partie opérationnelle de renforcement est construite à partir d'une baguette (20, 20') qui fait saillie sur un côté opposé ou un côté arrière du panneau intérieur (4, 4').

3. Structure de portière selon la revendication 1 ou 2, dans laquelle l'une de la première et de la seconde parties d'accouplement est une articulation (8) de la portière, et l'autre parmi la première et la seconde parties d'accouplement est un organe de verrouillage (9) de la portière.

4. Structure de portière selon l'une quelconque des revendications 1 à 3, dans laquelle le panneau intérieur (4) comprend en outre une troisième partie d'accouplement (7) qui est disposée sur le périmètre de la portière (1, 1') de manière à raccorder la portière (1, 1') et la carrosserie (2) du véhicule, et a en plus une partie opérationnelle de renforcement (21) subsidiaire qui se ramifie de la partie opérationnelle de renforcement (20, 20') et qui s'étend vers la troisième partie d'accouplement (7).

5. Structure de portière selon la revendication 4, dans laquelle la partie opérationnelle de renforcement subsidiaire est construite à partir d'une baguette (21) subsidiaire qui fait saillie sur le côté opposé ou le côté arrière du panneau intérieur (4, 4').

6. Structure de portière selon la revendication 1 ou 2, dans laquelle le panneau intérieur (4') comprend en outre une troisième et une quatrième parties d'accouplement (7, 15) qui sont disposées sur des côtés du périmètre de la portière (1') qui sont distinctes l'une de l'autre de manière à raccorder la portière (1') et la carrosserie (2) du véhicule, et possède une autre partie opérationnelle de renforcement (20) qui s'étend de manière à raccorder essentiellement la troisième partie d'accouplement (7) et la quatrième partie d'accouplement (15) et qui croise ladite partie opérationnelle de renforcement (20).

7. Structure de portière selon l'une quelconque des revendications 1 à 4, dans laquelle un motif formé par la partie opérationnelle de renforcement (20) et la partie opérationnelle de renforcement (21) subsidiaire a la forme d'un Y.

8. Structure de portière selon l'une quelconque des revendications 1 à 4, dans laquelle un motif formé par les parties opérationnelles de renforcement (20, 20') a la forme d'un V.

9. Structure de portière selon la revendication 6, dans laquelle un motif formé par les parties opérationnelles de renforcement (20) a la forme d'un X.

10. Structure de portière selon la revendication 6, dans laquelle:
la première partie d'accouplement est une articulation inférieure (8) de la portière,
la seconde partie d'accouplement est un organe de verrouillage (9) de la portière,
la troisième partie d'accouplement est une articulation supérieure (8) de la portière, et
la quatrième partie d'accouplement est un verrou subsidiaire (8) de la portière.

11. Structure de portière selon l'une quelconque des revendications 1 à 10, dans laquelle la partie opérationnelle de renforcement (20, 20') est une nervure qui est formée par une épaisseur de paroi du panneau intérieur localement agrandie.

12. Structure de portière selon l'une quelconque des revendications 1 à 11, dans laquelle la partie opérationnelle de renforcement (21) est une nervure qui est formée par une épaisseur de paroi du panneau intérieur localement agrandie.
